# FASCICULE DE BREVET EUROPEEN

(11) **EP 0 572 334 B1**
(45) Date de publication et mention de la délivrance du brevet: **30.10.1996**
(21) Numéro de dépôt: 93420206.0
(22) Date de dépôt: 21.05.1993
(51) Int. Cl.: F16K 1/226, F16C 33/08

(54) **Vanne papillon à corps brut de fonderie**
Klappenventil mit rohem Giessgehäuse
Butterfly valve with raw foundry housing

(30) Priorité: 26.05.1992 FR 9206581
(43) Date de publication de la demande: 01.12.1993
(73) Titulaire: OREG (Société anonyme), 73230 Saint Alban Leysse (FR)
(72) Inventeur: Gaime, Jean-Pierre, F-73000 Barberaz (FR); Rossier, Luc, F-73490 La Ravoire (FR)
(74) Mandataire: Poncet, Jean-François

(56) Documents cités:
- DE-A- 2 411 907
- FR-A- 1 070 098
- FR-A- 2 462 630

## Description

La présente invention concerne les vannes à papillon généralement utilisées pour commander le débit de fluides dans l'industrie ou dans les installations de distribution d'eau ou d'autres liquides.

Les vannes à papillon comportent un corps de vanne muni d'un alésage principal de passage de fluide, l'alésage étant obturable par un papillon monté rotatif selon un axe transversal et actionné par un arbre de commande logé dans un alésage transversal.

Le document FR-A-2 462 630 décrit une vanne à papillon dans laquelle l'arbre de commande est maintenu dans un palier ou coussinet autograisseur constitué d'une bague rapportée cylindrique et lisse, interposée entre l'arbre et le corps dans l'alésage transversal.

Le corps de vanne comprend généralement des moyens de fixation de bride de serrage, et des moyens de fixation d'une tête de commande pour la commande de l'arbre.

Dans ces vannes connues, on réalise le corps de vanne en plusieurs étapes successives, comprenant une première étape de coulée pour réaliser une ébauche de corps métallique, et comprenant des étapes ultérieures d'usinage pour percer l'alésage transversal de passage d'arbre de commande, et pour réaliser les parties de fixation de bride de serrage et de tête de commande.

Il en résulte que les opérations ultérieures d'usinage augmentent sensiblement le coût de production de ces vannes papillon.

Le problème proposé par la présente invention est de concevoir une nouvelle structure de vanne papillon permettant d'utiliser directement un corps de vanne entièrement brut de fonderie ou de moulage, ou tout au moins un corps de vanne à alésage transversal brut de moulage, pour en abaisser le coût de production, et pour supprimer toute étape ultérieure de reprise visant à réaliser les trous de fixation et l'alésage transversal de passage d'arbre de commande.

La difficulté est que les procédés de fonderie entrainent des variations dimensionnelles relativement importantes des corps obtenus, de sorte qu'il faut prévoir des moyens permettant d'accepter des tolérances dimensionnelles plus grandes que dans les pièces usinées.

En particulier, dans un corps brut dè fonderie, on doit s'attendre à des différences dimensionnelles de l'alésage transversal de passage d'arbre de commande de papillon, de sorte que l'alésage n'est pas a priori adapté pour tenir convenablement l'arbre de commande. Il en résulte des risques importants de défauts d'étanchéité à la fermeture de la vanne.

Par ailleurs, les procédés de fonderie ne permettent pas de réaliser de façon simple et économique des trous axiaux de passage pour les moyens de fixation. Les logements réalisés par fonderie sont des encoches ouvertes, qui n'assurent pas un positionnement fiable des éléments.

La solution selon l'invention consiste à prévoir une bague rapportée interposée entre le corps et l'arbre de commande pour former palier, la bague ayant un diamètre extérieur pouvant se modifier pour se conformer au diamètre intérieur de l'alésage transversal, sans modification sensible du diamètre intérieur de la bague dans lequel passe l'arbre de commande. Pour permettre ces variations de diamètre extérieur, la bague comprend des cannelures longitudinales ou hélicoidales, le diamètre extérieur des dents de cannelures étant supérieur au diamètre maximum d'alésage prévu selon les tolérances des procédés de réalisation du corps, le diamètre de pied des dents de cannelures étant inférieur au diamètre minimal d'alésage prévu par les tolérances des procédés de réalisation du corps. Avec une telle structure de bague, l'alésage transversal du corps de vanne peut être brut de moulage.

Les dents des cannelures peuvent avoir différents profils, par exemple un profil transversal triangulaire, un profil en développante de cercle, un profil à flancs parallèles, un profil trapézoidal, un profil circulaire.

La vanne selon l'invention comprend avantageusement des moyens de fixation de tête de commande comportant au moins deux encoches latérales ouvertes latéralement vers l'extérieur et conformées pour recevoir des boulons de fixation de tête de commande parallèles à l'arbre de commande ; la tête de commande comprend des excroissances venant obturer l'ouverture latérale des encoches pour entourer la vis de fixation dans son passage à travers l'encoche et assurer son guidage axial.

D'autres objets, caractéristiques et avantages de la présente invention ressortiront de la description suivante de modes de réalisation particuliers, faite en relation avec les figures jointes, parmi lesquelles :
- la figure 1 est une vue de face d'une vanne selon un mode de réalisation de la présente invention ;
- la figure 2 est un vue de côté en coupe longitudinale selon le plan I-I de la figure 1 ;
- la figure 3 illustre le profil transversal des dents de cannelures extérieures de bague selon un mode de réalisation à dents triangulaires ;
- les figures 4 à 8 illustrent d'autres formes de profil transversal de dent de cannelures ;
- les figures 9 à 12 illustrent des modes de réalisation de bague en coupe transversale, avec des répartitions différentes de denture ;
- les figures 13 à 16 illustrent des formes possibles d'alésage intérieur de la bague ;
- les figures 17 à 21 donnent des exemples non limitatifs de bagues combinant des répartitions de dentures extérieures et des formes d'alésage intérieur ;
- la figure 22 est une vue de côté d'une bague selon un mode de réalisation de l'invention ;
- la figure 23 est une vue de face de la bague de la figure 22 ;
- la figure 24 est une vue de côté en coupe longitudinale de la bague de la figure 22 ;
- la figure 25 est une vue de côté en coupe montrant des moyens de fixation de tête de commande selon l'invention ; et
- la figure 26 est une vue de dessus en coupe des moyens de fixation de la figure 25.

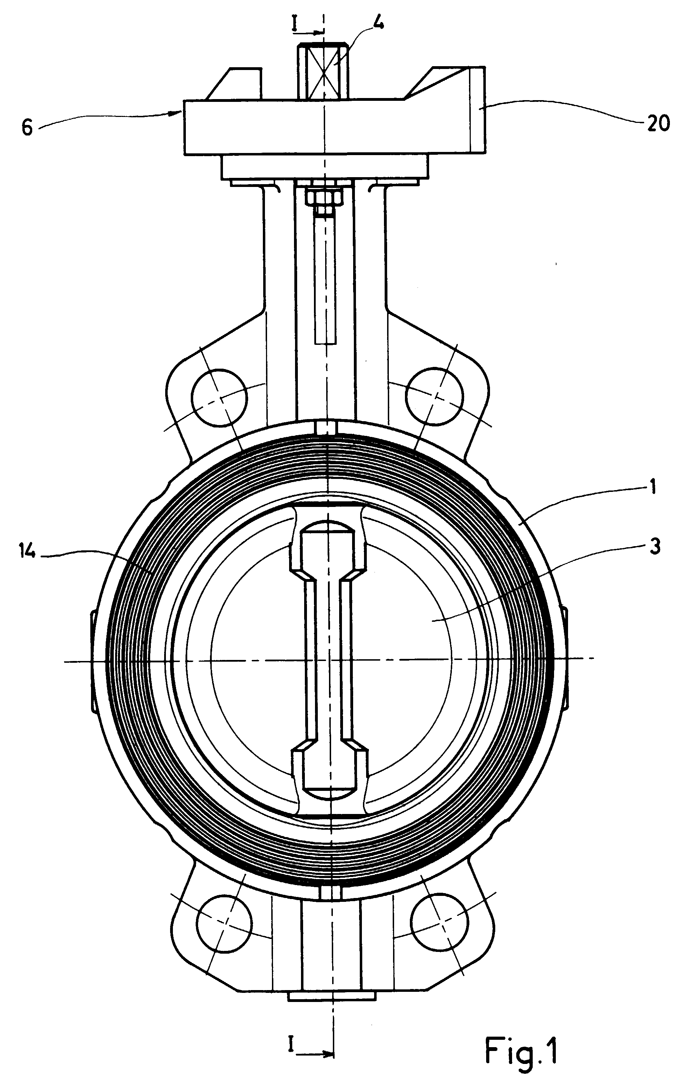

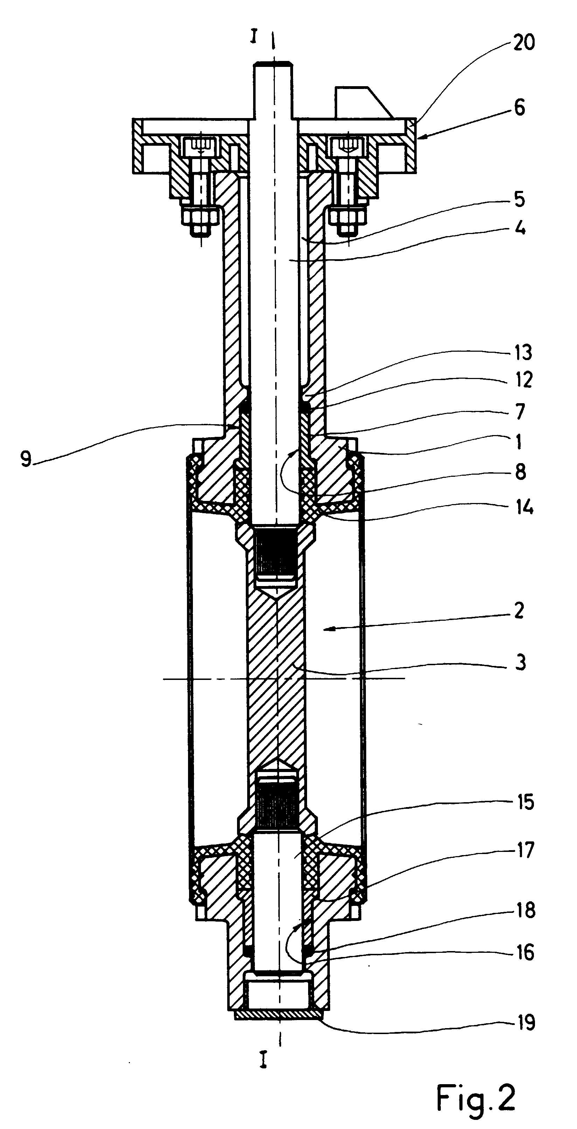

La structure générale de vanne papillon, telle que représentée sur les figures 1 et 2, comprend un corps de vanne 1 muni d'un alésage principal 2 de passage de fluide obturable par un papillon 3 monté rotatif selon un axe transversal I-I. Le papillon 3 est solidaire d'un arbre de commande 4 monté rotatif selon l'axe transversal I-I et logé dans un alésage transversal 5 correspondant du corps 1.

Des moyens 6 de fixation de brides de serrage et de fixation d'une tête de commande à réhausse 20 sont adaptés sur le corps 1 à l'extrémité de l'alésage transversal 5.

L'arbre de commande 4 est maintenu dans un palier constitué d'une bague rapportée 7 interposée entre l'arbre 4 et le corps 1 dans l'alésage transversal 5.

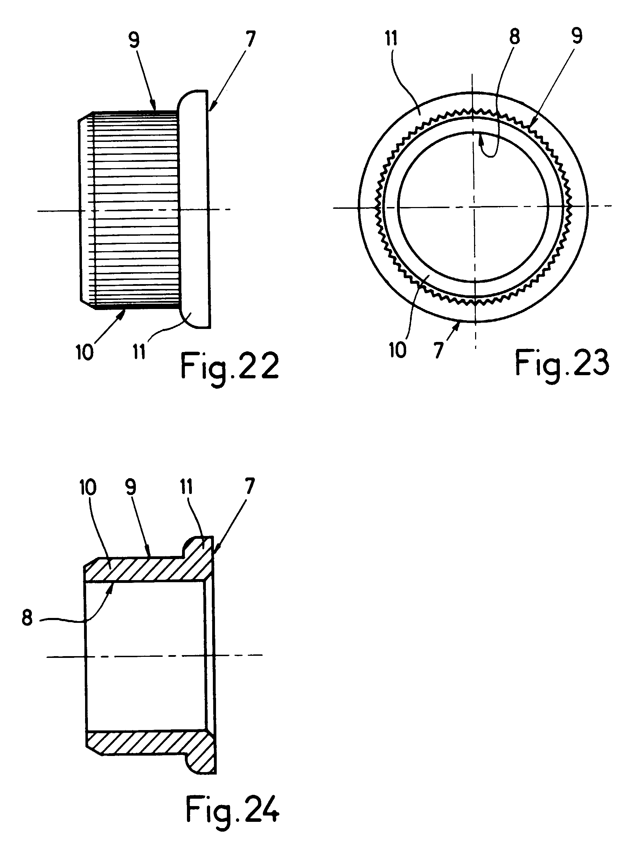

Selon l'invention, l'alésage transversal 5 du corps de vanne 1 est brut de fonderie, l'ensemble du corps 1 de vanne étant réalisé par moulage. La bague 7 formant palier comprend un alésage intérieur 8 dont la dimension est étroitement adaptée à celle de l'arbre de commande 4. La surface extérieure 9 de la bague 7 doit pouvoir s'adapter à des tailles légèrement différentes de l'alésage transversal 5 du corps 1, en fonction des tolérances relativement larges de dimension de cet alésage transversal 5 résultant des procédés de fonderie. Pour cela, la surface extérieure périphérique 9 de la bague 7 est cannelée selon des cannelures longitudinales ou hélicoïdales. Par exemple, sur les figures 22 à 24, on a représenté une telle bague 7 comprenant une portion cylindrique 10 tubulaire limitée par une surface intérieure cylindrique de révolution lisse formant l'alésage 8 de la bague, et limitée par une surface extérieure 9 cannelée à cannelures longitudinales. La portion cylindrique 10 est prolongée par un épaulement annulaire 11 limitant l'enfoncement de la bague 7 dans l'alésage transversal 5 en venant porter contre un épaulement correspondant du corps 1, comme le représente la figure 2. Un joint 12 d'étanchéité peut avantageusement être interposé entre la paroi intérieure d'alésage 5 transversal du corps 1 et l'arbre de commande 4, dans un logement ménagé entre la bague 7 et un épaulement 13 du corps 1. Une manchette 14 en élastomère assure l'étanchéité entre le corps 1 et le papillon 3.

Dans le mode de réalisation représenté sur les figures 1 et 2, le papillon 3 est tenu d'un côté par l'arbre de commande 4, et à l'opposé par un axe arrière 15 engagé de manière similaire dans un second alésage transversal 16 du corps 1 coaxial avec le premier alésage transversal 5. Une seconde bague 17 est interposée entre l'axe arrière 15 et le second alésage transversal 16, cette seconde bague 17 pouvant être similaire de la première bague 7. Un joint d'étanchéité 18 peut également être interposé entre le corps 1 et l'axe arrière 15 de manière similaire au premier joint d'étanchéité 12. Un bouchon 19 peut obturer l'extrémité du second alésage transversal 16.

Selon l'invention, les dents des cannelures ménagées sur la surface extérieure 9 de la bague 7 peuvent présenter différents profils, et leur taille est fonction des tolérances dimensionnelles de l'alésage transversal 5 que l'on veut compenser par la bague 7.

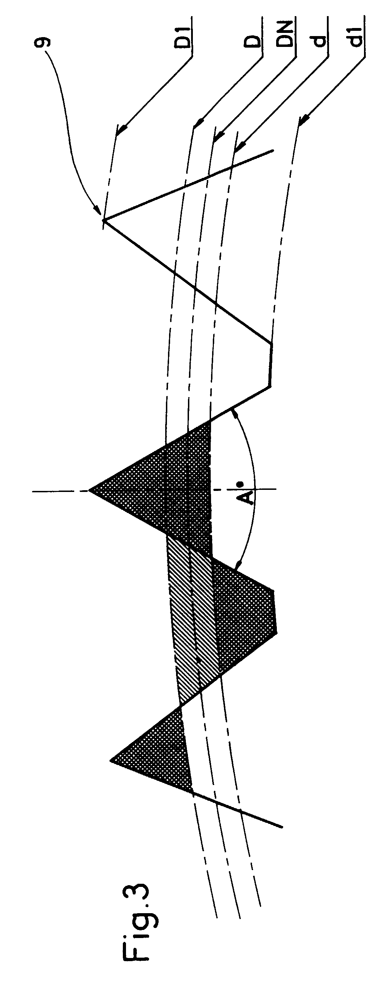

Par exemple, sur la figure 3, on a représenté un profil possible de dents de cannelures en triangle à base tronquée. On définit alors un diamètre D1 de tête de dent, un diamètre d1 de pied de dent, un diamètre maximal admissible D de l'alésage transversal 5 recevant la bague 7, un diamètre minimal admissible d pour l'alésage transversal 5 recevant la bague 7, et un diamètre nominal DN de l'alésage transversal 5.

Lors de l'introduction de la bague 7 dans un alésage transversal 5 dont le diamètre est légèrement plus petit que le diamètre de tête D1, les dents des cannelures de la bague 7 se déforment, la matière formant la tête des dents tendant à fluer dans les creux de dent.

De bons résultats sont obtenus en respectant les valeurs ci-après : l'angle moyen A formé par les flancs inclinés des dents peut avantageusement être compris entre 30 et 60 degrés ; le diamètre D1 peut être compris entre 1,0075 D et 1,0112 D ; le diamètre d1 de pied de dent peut avantageusement être compris entre 0,9849 d et 0,9886 d.

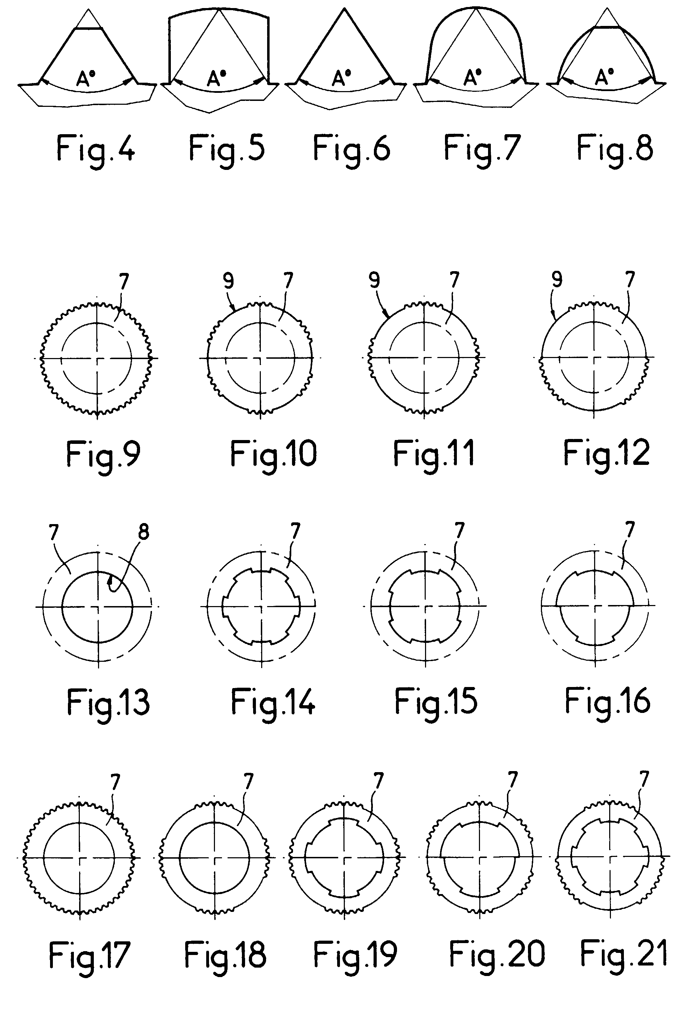

Selon l'invention, les dents des cannelures peuvent admettre des profils relativement variés, qui ont chacun leurs avantages et leurs inconvénients. Par exemple, la figure 4 représente un profil triangulaire à sommet tronqué ; la figure 5 représente un profil à flancs parallèles et sommet légèrement bombé ; la figure 6 est un profil triangulaire comme celui de la figure 3 ; la figure 7 est un profil à flancs parallèles et sommet circulaire ; la figure 8 représente un profil en développante de cercle.

De bons résultats peuvent être obtenus avec des dents de cannelures régulièrement réparties sur toute la surface extérieure 9 de la bague 7, comme le représente la figure 9.

On peut toutefois obtenir également de bons résultats en prévoyant des dents rassemblées sur des portions seulement de la surface, pour autant que ces portions soient régulièrement réparties sur le pourtour de la bague 7.

Par exemple, sur la figure 10, les dents sont réparties sur six zones décalées chacune de 60 degrés, la surface extérieure 9 de bague 7 étant ainsi formée d'une surface cylindrique de révolution avec six zones dentelées à dents proéminentes. De même, sur la figure 11, la surface extérieure 9 de bague 7 est une surface cylindrique de révolution avec quatre zones dentelées à dents proéminentes, les zones étant décalées de 90 degrés. Sur la figure 12, la surface extérieure 9 de la bague 7 comprend trois zones à dents proéminentes décalées de 120 degrés.

L'alésage intérieur 8 de la bague 7 peut être soit une surface cylindrique de révolution comme le représente la figure 13 ou les figures 23 et 24, soit une surface elle-même cannelée à cannelures beaucoup plus larges comme le représentent par exemple les figures 14 à 16. Les cannelures de l'alésage intérieur 8 ne sont pas destinées à s'écraser, mais constituent une surface dimensionnellement rigide pour le maintien correct de l'arbre de commande 4.

Il est possible de combiner chacune des répartitions de dentures des figures 9 à 12 avec l'une quelconque des formes d'alésage intérieur des figures 13 à 16. Les figures 17 à 21 illustrent quelques modes de combinaison possibles selon l'invention.

L'utilisation d'un corps 1 brut de fonderie pose le problème des tolérances dimensionnelles très grandes de l'alésage transversal 5, problème résolu par l'utilisation des formes particulières de bague 7 et éventuellement de seconde bague 17.

L'utilisation d'un corps 1 brut de fonderie pose également le problème de l'adaptation des moyens de fixation de tête de commande pour la commande de rotation de l'arbre 4. En effet, ces moyens de fixation de tête de commande doivent s'adapter traditionnellement dans des alésages axiaux du corps 1, et les alésages sont réalisés par usinage pour qu'ils soient de dimensions suffisamment précises.

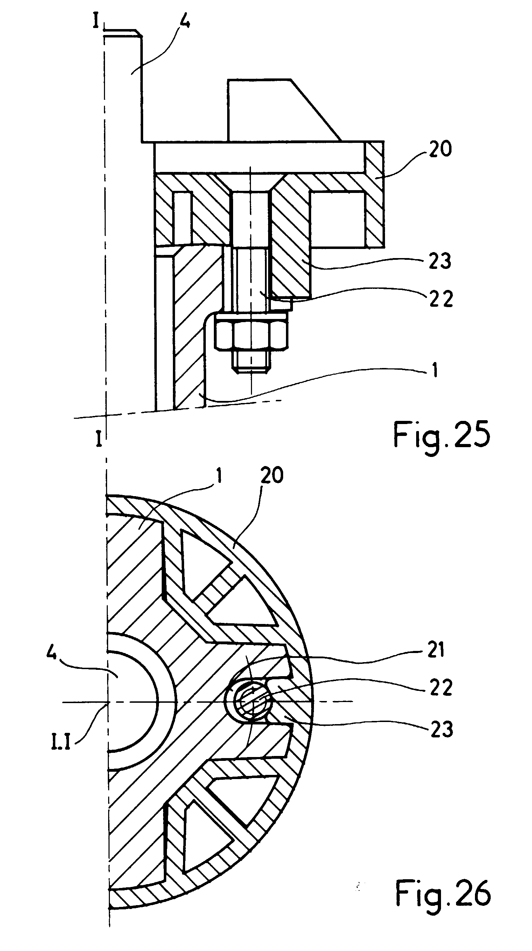

Selon le mode de réalisation illustré par les figures 25 et 26, les moyens de fixation de tête de commande, comprenant une réhausse 20, comprennent au moins deux encoches latérales diamétralement opposées 21, ouvertes latéralement vers l'extérieur, par exemple radialement par rapport à l'axe I-I du corps 1, et conformées dans le corps 1 pour recevoir des boulons de fixation tels que le boulon 22 parallèle à l'axe I-I. La réhausse 20 comprend elle-même des excroissances 23 venant se loger dans l'encoche 21 pour obturer l'ouverture latérale de ladite encoche 21, entourant ainsi la vis du boulon 22 dans son passage à travers l'encoche 21 correspondante et assurant son guidage axial. De cette façon, l'encoche 21 peut être réalisée brute de fonderie dans le corps 1.

Selon l'invention, le corps 1 peut notamment être réalisé en métal coulé par les procédés traditionnels de fonderie, ou en d'autres matériaux moulés.

La présente invention n'est pas limitée aux modes de réalisation qui ont été explicitement décrits, mais elle en inclut les diverses variantes et généralisations contenues dans le domaine des revendications ci-après.

## Revendications

1. Vanne papillon, avec un corps de vanne (1) comprenant un alésage principal (2) de passage de fluide obturable par un papillon (3) monté rotatif selon un axe transversal (I-I) et actionné par un arbre de commande (4) logé dans un alésage transversal (5), l'arbre de commande (4) étant maintenu dans un palier constitué d'une bague (7) rapportée interposée entre l'arbre (4) et le corps (1) dans l'alésage transversal (5), caractérisée en ce que :
- l'alésage transversal (5) du corps de vanne (1) est brut de moulage,
- la bague (7) formant palier comprend un alésage intérieur (8) adapté à la dimension de l'arbre de commande (4), et une surface périphérique extérieure (9) cannelée selon des cannelures longitudinales ou hélicoïdales,
- le diamètre extérieur (D1) des dents de cannelures est supérieur au diamètre maximal d'alésage transversal (5) selon les tolérances de fabrication du corps (1),
- le diamètre (dl) de pied de dents des cannelures de bague (7) est inférieur au diamètre minimal de l'alésage transversal (5) selon les tolérances de fabrication du corps (1).

2. Vanne papillon selon la revendication 1, caractérisée en ce que les dents des cannelures de bague (7) ont un profil transversal triangulaire.

3. Vanne papillon selon la revendication 1, caractérisée en ce que les dents des cannelures de bague (7) ont un profil transversal en développante de cercle.

4. Vanne papillon selon la revendication 1, caractérisée en ce que les dents des cannelures de bague (7) ont des flancs parallèles et un sommet arrondi.

5. Vanne papillon selon la revendication 1, caractérisée en ce que les dents des cannelures de bague (7) ont un profil transversal triangulaire à sommet tronqué.

6. Vanne papillon selon l'une quelconque des revendications 2 à 5, caractérisée en ce que l'angle moyen (A) des flancs de dents de cannelures est compris entre 30 et 60 degrés.

7. Vanne papillon selon l'une quelconque des revendications 1 à 6, caractérisée en ce qu'elle comprend des moyens de fixation de tête de commande tels que :
- le corps (1) de vanne comprend au moins deux encoches latérales (21) ouvertes vers l'extérieur, conformées pour recevoir des boulons (22) de fixation de tête de commande (20)'parallèles à l'arbre de commande (4),
- la tête de commande (20) comprend des excroissances (23) venant obturer l'ouverture des encoches (21) du corps (1) pour entourer la vis du boulon de fixation (22) dans son passage à travers l'encoche (21) correspondante et assurer son guidage axial.

## Claims

1. Butterfly valve, with a valve housing (1) comprising a main bore (2) for passage of fluid, closable by a butterfly (3) which is mounted to rotate about a transverse axis (I - I) and is actuated by a control shaft (4) lodged in a transverse bore (5), the control shaft (4) being retained in a bearing constituted by a slipped-on ring (7) interposed between the shaft (4) and the housing (1) in the transverse bore (5), characterised in that:
- the transverse bore (5) of the valve housing (1) is in a raw casting state,
- the ring (7) forming the bearing comprises an internal bore (8) adapted to the dimension of the control shaft (4), and an external peripheral surface (9) provided with longitudinal or helical ribs,
- the external diameter (D1) of the rib indentations is greater than the maximum diameter of the transverse bore (5) according to the manufacturing tolerances of the housing (1),
- the diameter (d1) of the foot of the rib indentations of the ring (7) is less than the minimum diameter of the transverse bore (5) in terms of the manufacturing tolerances of the housing (1).

2. Butterfly valve according to Claim 1, characterised in that the rib indentations of the ring (7) have a triangular transverse profile.

3. Butterfly valve according to Claim 1, characterised in that the rib indentations of the ring (7) have a transverse profile which is an involute of a circle.

4. Butterfly valve according to Claim 1, characterised in that the rib indentations of the ring (7) have parallel sides and a rounded apex.

5. Butterfly valve according to Claim 1, characterised in that the rib indentations of the ring (7) have a transverse profile which is triangular with a truncated apex.

6. Butterfly valve according to any one of Claims 2 to 5, characterised in that the average angle (A) of the sides of the rib indentations is comprised between 30 and 60 degrees.

7. Butterfly valve according to any one of Claims 1 to 6, characterised in that it comprises means of securing the control head such as:
- the valve housing (1) comprises at least two lateral notches (21) opening towards the exterior, conformed to receive securing bolts (22) for the control head (20) parallel to the control shaft (4),
- the control head (20) comprises protuberances (23) which close the aperture of the notches (21) of the housing (1) in order to surround the screw of the securing bolt (22) as it passes through the corresponding notch (21) and ensures its axial guidance.

## Patentansprüche

1. Klappenventil, mit einem Ventilkörper (1), der eine Fluiddurchgang-Hauptbohrung (2) aufweist, die durch eine Ventilklappe (3) verschließbar ist, welche drehbar um eine Querachse (I-I) angeordnet und durch eine Steuerwelle (4) betätigt ist, die in einer Querbohrung (5) angeordnet ist, wobei die Steuerwelle (4) in einem Wellenlager gehalten ist, das durch einen zwischen der Welle (4) und dem Körper (1) in der Querbohrung (5) angeordneten aufgesetzten Ring (7) gebildet ist, dadurch gekennzeichnet, daß
- die Querbohrung (5) des Ventilkörpers (1) eine unbearbeitete Ausformung ist,
- der das Wellenlager bildende Ring (7) eine Innenbohrung (8) aufweist, welche an die Abmessung der Steuerwelle (4) angepasst ist, und eine äußere Umfangsfläche (9), die mit längsverlaufenden oder schraubenförmigen Rillen gerillt ist,
- der Außendurchmesser (D1) der Kämme der Rillen größer ist als der maximale Durchmesser der Querbohrung (5) gemäß den Herstellungstoleranzen des Körpers (1),
- der Durchmesser (dl) des Fußes der Kämme der Rillen des Ringes (7) kleiner ist als der minimale Durchmesser der Querbohrung (5) gemäß den Herstellungstoleranzen des Körpers (1).

2. Klappenventil nach Anspruch 1, dadurch gekennzeichnet, daß die Kämme der Rillen des Ringes (7) ein dreieckförmiges Querprofil haben.

3. Klappenventil nach Anspruch 1, dadurch gekennzeichnet, daß die Kämme der Rillen des Ringes (7) ein Querprofil in der Ausbildung der Abwicklung eines Kreises haben.

4. Klappenventil nach Anspruch 1, dadurch gekennzeichnet, daß die Kämme der Rillen des Ringes (7) parallele Flanken und eine abgerundete Spitze haben.

5. Klappenventil nach Anspruch 1, dadurch gekennzeichnet, daß die Kämme der Rillen des Ringes (7) ein dreieckförmiges Querprofil mit einer stumpfen Spitze haben.

6. Klappenventil nach einem der Ansprüche 2 bis 5, dadurch gekennzeichnet, daß der mittlere Winkel (A) der Flanken der Kämme der Rillen zwischen 30 und 60 Grad beträgt.

7. Klappenventil nach einem der Anprüche 1 bis 6, dadurch gekennzeichnet, daß es Bedienkopf-Befestigungsmittel von solcher Art aufweist, daß
- der Ventilkörper (1) wenigstens zwei seitliche Aussparungen (21) aufweist, die nach außen offen und zur Aufnahme von Befestigung-Schraubenbolzen (22) mit einem Bedienkopf (20) parallel zu der Steuerwelle (4) angepasst sind,
- der Bedienkopf (20) Vorsprünge (23) aufweist, welche einen Verschluß der Öffnung der Aussparungen (21) des Körpers (1) ergeben, um das Gewinde des Befestigung-Schraubenbolzens (22) gemäß seinem Durchgang quer über die entsprechende Aussparung (21) zu umgeben und seine axiale Führung sicherzustellen.
